# EUROPÄISCHE PATENTSCHRIFT

(11) **EP 1 674 691 B1**
(45) Veröffentlichungstag und Bekanntmachung des Hinweises auf die Patenterteilung: **11.08.2010**
(21) Anmeldenummer: 05111224.1
(22) Anmeldetag: 24.11.2005
(51) Int. Cl.: F02B 27/02

(54) **Lufteinlasseinrichtung einer Brennkraftmaschine**
Air intake device of internal combustion engine
Dispositif d'admission d'air d'un moteur à combustion interne

(30) Priorität: 22.12.2004 DE 102004062976
(43) Veröffentlichungstag der Anmeldung: 28.06.2006
(73) Patentinhaber: MAHLE Filtersysteme GmbH, 70376 Stuttgart (DE); Bayerische Motoren Werke Aktiengesellschaft, 80788 München (DE)
(72) Erfinder: PAULINI, Uwe, 73730 Esslingen (DE); GRAF, Hubert, 81669, München (DE); KÖGLMEIER, Manfred, 84048, Mainburg (DE); KÖLMEL, Armin, 72108, Rottenburg (DE); SCHWEIKERT, Klaus, 74182, Obersulm (DE)
(74) Vertreter: BRP Renaud & Partner

(56) Entgegenhaltungen:
- DE-A1- 1 576 022
- DE-A1- 19 717 272
- DE-A1- 19 728 600
- DE-A1-102004 030 023
- DE-B- 1 009 429
- DE-U1- 29 817 005

## Beschreibung

Die vorliegende Erfindung betrifft eine Lufteinlasseinrichtung zur Frischluftversorgung einer Brennkraftmaschine, insbesondere in einem Kraftfahrzeug, mit den Merkmalen des Oberbegriffs des Anspruchs 1.

Aus der DE 197 17 272 A1 ist eine derartige Lufteinlasseinrichtung bekannt, die einen Verteiler, mehrere am Verteiler fest angeordnete feste Kanäle sowie mehrere im Verteiler verstellbar angeordnete verstellbare Kanäle aufweist. Der Verteiler ist mit wenigstens einem Frischlufteinlass ausgestattet, durch den dieser mit Frischluft versorgt wird. Die festen Kanäle weisen jeweils einen mit dem Verteiler kommunizierenden Einlass und jeweils einen an die Brennkraftmaschine anschließbaren Auslass auf. Im Unterschied dazu weisen die verstellbaren Kanäle jeweils einen im Verteiler angeordneten Einlass und jeweils einen im Verteiler angeordneten Auslass auf und sind zwischen einer Drehmomentstellung und einer Leistungsstellung verstellbar. In der Drehmomentstellung schließen die Auslässe der verstellbaren Kanäle jeweils an einen Einlass der festen Kanäle an, was zu einer Verlängerung der festen Kanäle durch die verstellbaren Kanäle führt. Im Unterschied dazu sind in der Leistungsstellung die Auslässe der verstellbaren Kanäle von den Einlässen der festen Kanäle beabstandet. In der Leistungsstellung kann die Frischluft aus dem Verteiler direkt durch die Einlässe der festen Kanäle in Richtung Brennkraftmaschine abströmen. Die wirksame Kanallänge entspricht somit der Länge der festen Kanäle. In der Drehmomentstellung strömt die Frischluft vom Verteiler durch die Einlässe der verstellbaren Kanäle in Richtung Brennkraftmaschine. Die wirksame Kanallänge ist dann die Länge der festen Kanäle zuzüglich der Länge der verstellbaren Kanäle. Mit Hilfe unterschiedlicher Kanallängen zwischen Verteiler und Brennkraftmaschine können bei der Frischluftbeladung von Brennräumen der Brennkraftmaschine Schwingungseffekte und Resonanzeffekte ausgenutzt werden, um die Beladung der Brennkraftmaschine zu verbessern. Bei größeren Drehzahlen der Brennkraftmaschine führt die Leistungsstellung aufgrund der kürzeren Kanallänge zu einer verbesserten Beladung, was letztlich die Leistungsabgabe der Brennkraftmaschine verbessert. Bei kleineren Drehzahlen führt die Drehmomentstellung aufgrund der vergrößerten Kanallänge ebenfalls zu einer verbesserten Beladung, was dann zu einer verbesserten Drehmomentabgabe der Brennkraftmaschine führt.

Die verstellbaren Kanäle sind dabei im Verteiler translatorisch verstellbar angeordnet, wobei sie zum Verstellen zwischen der Drehmomentstellung und der Leistungsstellung einen translatorischen Hub durchführen. Zum Verstellen der verstellbaren Kanäle ist eine Verstelleinrichtung vorgesehen. Bei der bekannten Lufteinlasseinrichtung ist die Verstelleinrichtung als Wippenanordnung ausgestaltet.

Aus der DE 197 28 600 A1 ist eine weitere Lufteinlasseinrichtung bekannt, die einen Verteiler mit festen Kanälen und darin verstellbar angeordneten verstellbaren Kanälen zur Verlängerung der festen Kanäle aufweist. Die verstellbaren Kanäle sind dabei um eine Schwenkachse verstellbar angeordnet, die sich quer zur Strömungsrichtung in den Kanälen erstreckt. An den Auslässen der verstellbaren Kanäle sind Manschetten aus eine Dichtungsmaterial angebracht, die in der Drehmomentstellung dicht an den Einlässen der festen Kanäle zur Anlage kommen.

Die DE 298 17 005 U1 zeigt ebenfalls eine Lufteinlasseinrichtung, bei der in einem Verteiler verstellbare Kanäle hubverstellbar angeordnet sind. Eine zugehörige Verstellenrichtung arbeitet dabei mit Kolben-Zylinder-Aggregaten.

Die DE 1 576 022 A1 zeigt eine Brennkraftmaschine mit Luftansaugstutzen, an denen eine Verlängerungshülse mit Einlauftrichter teleskopisch verstellbar angeordnet ist. Zur Hubverstellung der Verlängerungshülse ist ein Kurbeltrieb vorgesehen.

Bei der aus der DE 41 37 704 A1 bekannten Lufteinlassrichtung sind die verstellbaren Kanäle im Verteiler rotatorisch verstellbar angeordnet, so dass sie zum Verstellen zwischen der Drehmomentstellung und der Leistungsstellung eine Drehbewegung durchführen. Mit Hilfe einer derartigen Drehbewegung können die Auslässe der verstellbaren Kanäle für die Leistungsstellung vergleichsweise weit von den Einlässen der festen Kanäle entfernt werden, um Auswirkungen auf das Einströmen der Frischluft in die Einlässe der festen Kanäle zu vermeiden.

Aus der JP 01-267313 A ist es zur Realisierung unterschiedlicher Kanallängen zwischen Verteiler und Brennkraftmaschine bekannt, vom Verteiler kommende lange Kanäle direkt an die Brennkraftmaschine anzuschließen und vom Verteiler kommende kurze Kanäle seitlich an die langen Kanäle anzuschließen, um dadurch einen stromauf liegenden, längeren Abschnitt der längeren Kanäle zu umgehen. An der Anschlussstelle ist ein Drehschieber angeordnet, der bedarfsabhängig die langen oder die kurzen Kanäle aktiviert.

Aus der US 5,092,284 ist eine weitere Lufteinlasseinrichtung bekannt, die relativ lange, in den Verteiler hineingeführte Kanäle aufweist, wobei jeder Kanal innerhalb des Verteilers eine radiale Bypassöffnung aufweist, die mit Hilfe einer Schiebehülse gesteuert werden kann. Auf diese Weise kann durch eine Schiebebetätigung der Schiebehülse die lange Kanallänge oder die kurze Kanallänge aktiviert werden.

Die vorliegende Erfindung beschäftigt sich mit dem Problem, für eine Lufteinlasseinrichtung der eingangs genannten Art eine verbesserte Ausführungsform anzugeben, die sich insbesondere durch einen konstruktiv einfachen und dafür funktionssicheren und relativ preiswerten Aufbau auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, für die verstellbaren Kanäle eine translatorische Hubverstellbarkeit zu realisieren, um diese zwischen der Leistungsstellung und der Drehmomentstellung zu verstellen. Eine derartige translatorische Verstellung hat gegenüber einer rotatorischen Verstellung einen erheblichen Bauraumvorteil. Desweiteren kann eine translatorische Verstellung im Vergleich zu einem Drehschieber erheblich einfacher realisiert werden. Gegenüber einer Schiebehülse, die in relativ langen Kanälen einen Bypass steuert, hat die translatorische Verstellbarkeit der verstellbaren Kanäle den Vorteil, dass diese ohne weiteres so gestaltet werden können, dass in der Drehmomentstellung am Übergang zwischen den verstellbaren Kanälen und den festen Kanälen im wesentlichen kein Querschnittssprung auftritt. Im Unterschied dazu ist bei einer Schiebehülse ein derartiger Querschnittssprung unvermeidbar.

Erfindungsgemäß weist die Verstelleinrichtung einen Kurbeltrieb auf. Dies hat den Vorteil, dass auf kleinem Raum große Kräfte realisierbar sind, beispielsweise um die verstellbaren Kanäle in der jeweiligen Stellung stabil halten bzw. positionieren zu können. Ferner sind erfindungsgemäß die Auslässe der verstellbaren Kanäle jeweils mit einer Ringdichtung versehen, die in der Drehmomentstellung den jeweiligen Einlass des zugehörigen festen Kanals nach außen fest verschließt. Hierdurch lassen sich Leckagen effektiv vermeiden, wodurch insbesondere die strömungsdynamischen Effekte der Ladevorgänge mit erhöhter Effizienz ausgenutzt werden können.

Die erfindungsgemäße Lufteinlasseinrichtung zeichnet sich somit durch eine kompakte Bauweise, durch einen preiswerten Aufbau, durch eine einfache Realisierbarkeit und durch die Möglichkeit aus, den Strömungsverlauf einfach zu optimieren.

Vorzugsweise erfolgt die Verstellung der verstellbaren Kanäle so, dass in der Leistungsstellung zwischen den Einlässen der festen Kanäle und den Auslässen der verstellbaren Kanäle jeweils ein Ringspalt ausgebildet ist, während gleichzeitig die Einlässe der verstellbaren Kanäle offen sind. Auf diese Weise ist es grundsätzlich möglich, dass auch in der Leistungsstellung Luft durch die verstellbaren Kanäle den Einlässen der festen Kanäle zugeführt wird. Insbesondere ergibt sich hierdurch gemäß einer vorteilhaften Weiterbildung die Möglichkeit, die Dimensionierung der Ringspalte und die Konturierung der Einlässe der festen Kanäle sowie der Auslässe der verstellbaren Kanäle so aufeinander abzustimmen, dass sich an jedem Ringspalt eine Saugstrahlpumpe ausbildet, die im Betrieb der Lufteinlasseinrichtung zusätzlich Frischluft durch den jeweiligen verstellbaren Kanal ansaugt. Durch die gezielte Herbeiführung des Saugstrahleffekts wird die Luftzuführung zur Brennkraftmaschine in der Leistungsstellung verbessert. Bemerkenswert ist dabei, dass auch die Saugstrahlwirkung mit der Frequenz der Ladungsvorgänge moduliert ist, wodurch zusätzliche Resonanzeffekte ausgenutzt werden können. Die Auslegung dieser Saugstrahlpumpen kann beispielsweise so erfolgen, dass etwa ein drittel der den Einlässen der festen Kanäle zugeführten Frischluft durch die verstellbaren Kanäle angesaugt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen Querschnitt einer Lufteinlasseinrichtung nach der Erfindung in einer Leistungsstellung,
- Fig. 2: ein Querschnitt wie in Fig. 1, jedoch bei einer Drehmomentstellung,
- Fig. 3: eine teilgeschnittene Draufsicht auf einen Abschnitt der Lufteinlasseinrichtung,
- Fig. 4: eine perspektivische Ansicht auf verstellbare Kanäle und eine Verstelleinrichtung in der Drehmomentstellung,
- Fig. 5: eine Ansicht wie in Fig. 4, jedoch in der Leistungsstellung.

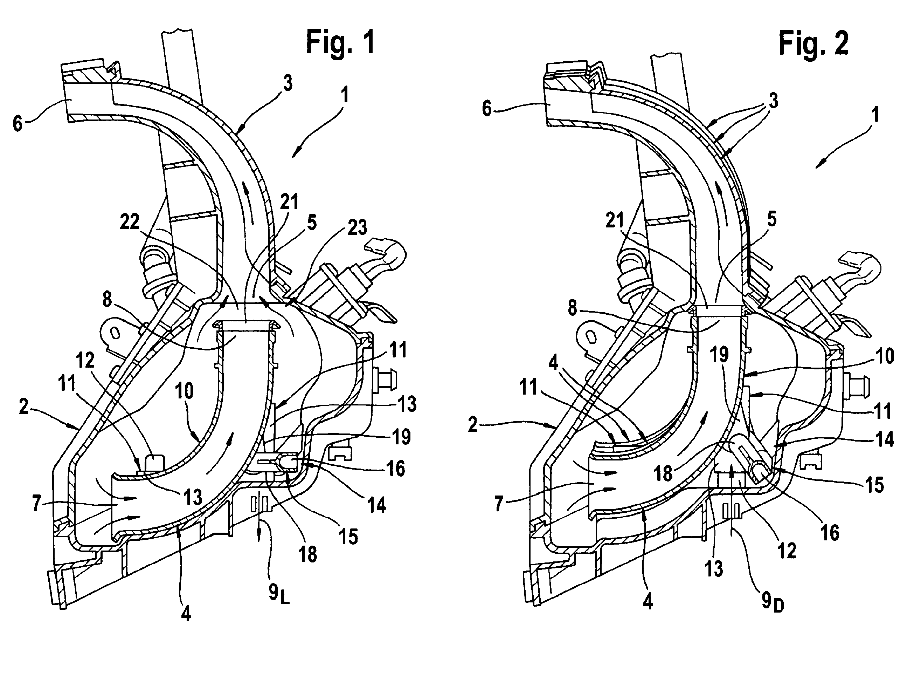

Zur Frischluftversorgung einer Brennkraftmaschine, insbesondere in einem Kraftfahrzeug, dient entsprechend den Fig. 1 bis 5 eine Lufteinlasseinrichtung 1, die einen Verteiler 2, mehrere feste Kanäle 3 sowie mehrere verstellbare Kanäle 4 aufweist. Der Verteiler 2 weist üblicherweise zumindest einen Frischlufteinlass auf, der hier aufgrund der gewählten Ansichten jedoch nicht sichtbar ist. Mit diesem Frischlufteinlass ist der Verteiler 2 an einen Frischlufttrakt der Brennkraftmaschine anschließbar und erhält über diesen im Betrieb Frischluft. Die festen Kanäle 3 sind am Verteiler 2 fest angeordnet und weisen jeweils einen mit dem Verteiler 2 kommunizierenden Einlass 5 sowie jeweils einen an die Brennkraftmaschine anschließbaren Auslass 6 auf. Im Unterschied dazu sind die verstellbaren Kanäle 4 nicht fest an, sondern verstellbar im Verteiler 2 angeordnet und besitzen jeweils einen im Verteiler 2 angeordneten Einlass 7 sowie jeweils einen im Verteiler 2 angeordneten Auslass 8.

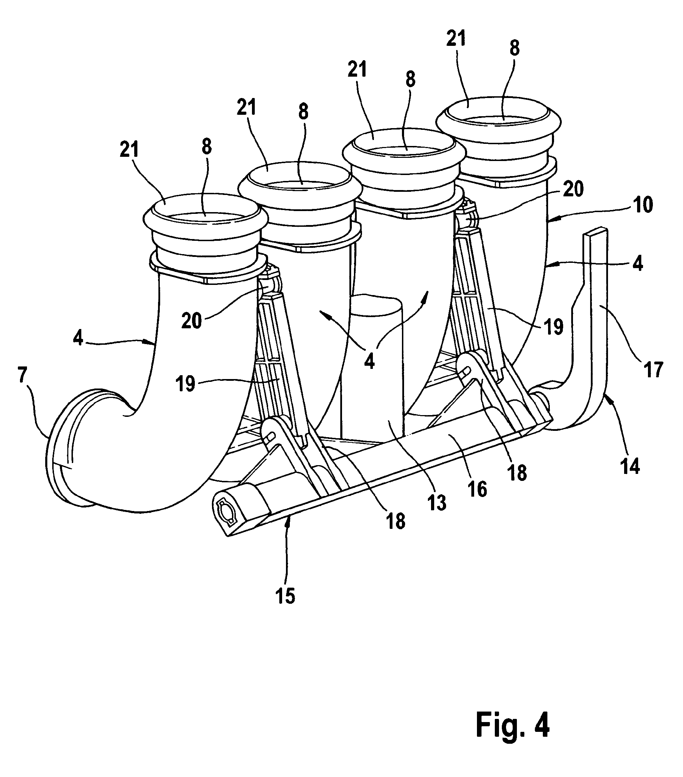

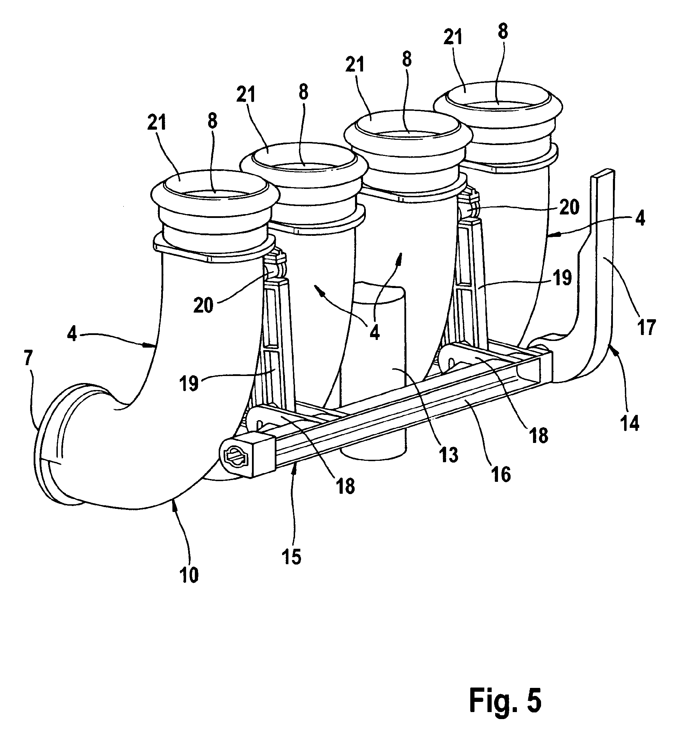

Die verstellbaren Kanäle 4 können gemeinsam zwischen einer in den Fig. 1 und 5 wiedergegebenen Leistungsstellung und einer in den Fig. 2 und 4 wiedergegebenen Drehmomentstellung verstellt werden. In der Leistungsstellung sind gemäß den Fig. 1 und 5 die Auslässe 8 der verstellbaren Kanäle 4 von den Einlässen 5 der festen Kanäle 3 beabstandet. Im Unterschied dazu sind in der Drehmomentstellung gemäß den Fig. 2 und 4 die Auslässe 8 der verstellbaren Kanäle 4 so positioniert, dass sie jeweils an einen Einlass 5 der festen Kanäle 3 anschließen. Auf diese Weise bilden die verstellbaren Kanäle 4 in der Drehmomentstellung jeweils eine Verlängerung des zugehörigen festen Kanals 3.

Erfindungswesentlich ist nun, dass die Verstellbewegung der verstellbaren Kanäle 4, mit deren Hilfe die verstellbaren Kanäle 4 zwischen ihrer Leistungsstellung und ihrer Drehmomentstellung verstellt werden können, eine translatorische Hubbewegung ist. Diese Hubbewegung ist in den Fig. 1 und 2 durch Pfeile repräsentiert, die mit 9_{L} für den in die Leistungsstellung überführenden Hub und mit 9_{D} für den in die Drehmomentstellung überführenden Hub bezeichnet sind. Die verstellbaren Kanäle 4 sind demnach im Verteiler 2 translatorisch verstellbar angeordnet, was zur Unterbringung der verstellbaren Kanäle 4 im Verteiler 2 nur einen relativ geringen Bauraum erfordert.

Um einen möglichst einfachen und preiswerten Aufbau erzielen zu können, sind zumindest zwei, bei der hier gezeigten Ausführungsform sämtliche, verstellbare Kanäle 4 zu einer gemeinsam verstellbaren Einheit 10 zusammengefasst. Vorzugsweise können die verstellbaren Kanäle 4 bzw. die ganze Einheit 10 einstückig hergestellt sein, beispielsweise mittels eines Kunststoffspritzgussverfahrens.

Zur Realisierung der translatorischen Verstellbarkeit der verstellbaren Kanäle 4 sind im vorliegenden Fall zwei Linearführungen 11 vorgesehen, mit deren Hilfe die verstellbaren Kanäle 4 bzw. die Einheit 10 am Verteiler 2 translatorisch verstellbar gelagert ist. Eine derartige Linearführung 11 kann - wie hier - einen Führungsstab 12 und eine damit zusammenwirkende Führungshülse 13 aufweisen. Zur Realisierung der linearen Führung ist die Führungshülse 13 auf den Führungsstab 12 aufgesteckt und an diesem linear beweglich gelagert. Im vorliegenden Fall sind die beiden Führungshülsen 13 an den verstellbaren Kanälen 4 bzw. an der Einheit 10 angebracht, während die Führungsstäbe 12 am Verteiler 2 angebracht sind. Es ist klar, dass grundsätzlich auch eine umgekehrte Bauweise realisierbar ist, bei der zumindest eine der Führungshülsen 13 am Verteiler 2 angebracht ist, während dann der zugehörige Führungsstab 12 an den verstellbaren Kanälen 4 bzw. an der Einheit 10 angebracht ist.

Zur Realisierung der linearen bzw. transversalen Verstellbarkeit der verstellbaren Kanäle 4 ist weiterhin eine Verstelleinrichtung 14 vorgesehen, die einen Kurbeltrieb 15 aufweist. Dabei ist dieser Kurbeltrieb 15 innerhalb des Verteilers 2 angeordnet und umfasst eine am Verteiler 2 drehbar gelagerte Kurbelwelle 16. Diese Kurbelwelle 16 ist zweckmäßig an einer hier nicht erkennbaren Stelle aus dem Verteiler 2 herausgeführt und gemäß den Fig. 4 und 5 mit einem geeigneten Stellglied 17 drehfest verbunden. Eine Drehbetätigung des Stellglieds 17 führt somit zu einer Drehverstellung der Kurbelwelle 16. Desweiteren ist die Kurbelwelle 16 mit wenigstens einem Pleuel 18 ausgestattet. Im vorliegenden Beispiel weist die Kurbelwelle 16 zwei Pleuel 18 auf. Über die Pleuel 18 treibt die Kurbelwelle 16 jeweils eine Pleuelstange 19 an, die zumindest an einem verstellbaren Kanal 4 schwenkbar gelagert ist. Im vorliegenden Ausführungsbeispiel sind die Pleuelstangen 19 an der Einheit 10 gelagert, an der entsprechende Lagerstellen 20 ausgebildet sind.

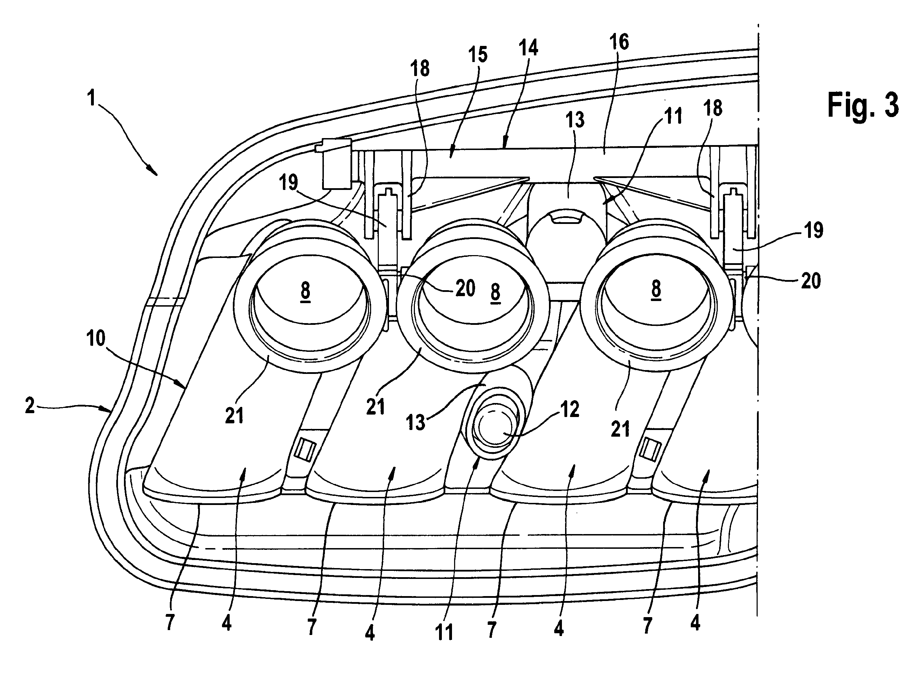

Fig. 3 zeigt nochmals deutlich, wie die Linearführungen 11 und die Verstelleinrichtung 14 mit den verstellbaren Kanälen 4 bzw. mit der Einheit 10 zusammenwirken.

Für den hier realisierten Kurbeltrieb 15 ist bemerkenswert, dass die Kurbelwelle 16 möglichst weit weg von den Einlässen 5 der festen Kanäle 3 im Verteiler 2 angeordnet ist, während gleichzeitig die Lagerstellen 20, an denen die Pleuelstangen 19 an den verstellbaren Kanälen 4 angelenkt sind, möglichst nahe an den Auslässen 8 der verstellbaren Kanäle 4 positioniert sind. Hierdurch lassen sich für den Kurbeltrieb 15 besonders günstige Hebelwirkungen erzielen, was ein kraftvolles Andrücken der Auslässe 8 der verstellbaren Kanäle 4 an die Einlässe 5 der festen Kanäle 3 vereinfacht. Zweckmäßig ist der Kurbeltrieb 15 außerdem so ausgestaltet und angeordnet, dass die verstellbaren Kanäle 4 ihre Drehmomentstellung am oder nahe am oberen Totpunkt des Kurbeltriebs 15 erreichen. Hierdurch kann eine maximale Kraftwirkung zum Andrücken der Auslässe 8 der verstellbaren Kanäle 4 an den Einlässen 5 der festen Kanäle 3 in der Drehmomentstellung erzielt werden.

Aus den Fig. 1 und 5 ist gut erkennbar, dass in der Leistungsstellung die Krafteinleitung des Kurbeltriebs 15 in die verstellbaren Kanäle 4 im wesentlichen parallel zur Hubrichtung der verstellbaren Kanäle 4 orientiert ist. Desweiteren ist den Fig. 2 und 4 entnehmbar, dass die Pleuelstangen 19 und die Pleuel 18 in der Drehmomentstellung einen Winkel zwischen 160° und 180° einschließen, was dem Bereich des oberen Totpunkts des Kurbeltriebs 15 entspricht.

Bei der hier gezeigten, bevorzugten Ausführungsform sind die Auslässe 8 der verstellbaren Kanäle 4 jeweils mit einer Ringdichtung 21 ausgestattet. Diese Ringdichtungen 21 bestehen aus einem zur Abdichtung besonders geeigneten Dichtungsmaterial und können insbesondere an die verstellbaren Kanäle 4 angespritzt sein.

Gemäß Fig. 2 sind die Ringdichtungen so gestaltet, dass sie in der Drehmomentstellung den jeweils zugeordneten Einlass 5 des zugehörigen festen Kanals 3 nach außen dicht verschließen. D.h. dass in der Drehmomentstellung die Frischluft nahezu ausschließlich durch die verstellbaren Kanäle 4 strömen muss, um in die festen Kanäle 3 zu gelangen.

Desweiteren ist Fig. 2 zu entnehmen, dass in der Drehmomentstellung ein nicht näher bezeichneter Übergangsbereich zwischen den verstellbaren Kanälen 4 und den festen Kanälen 3 im wesentlichen einen konstanten Querschnitt aufweist. Auf diese Weise werden schädliche Querschnittssprünge in diesem Übergang vermieden, was die Frischluftzuführung in der Drehmomentstellung verbessert. Erreicht wird dies beispielsweise durch eine Anpassung der Dichtkontur der Ringdichtungen 21 an die Kontur der Einlässe 5 der festen Kanäle 3. Beispielsweise besitzen die Einlässe 5 der festen Kanäle 3 - wie hier - jeweils einen Einlauftrichter. Diese Einlauftrichterform reduziert in der Leistungsstellung den Einströmwiderstand im Bereich der Einlässe 5 der festen Kanäle 3.

Die Frischluftzuführung in der Drehmomentstellung wird bei der hier gezeigten Ausführungsform auch dadurch in aerodynamischer Sicht verbessert, dass zum einen die verstellbaren Kanäle 4 im Bereich deren Auslässe 8 und zum andern die festen Kanäle 3 im Bereich deren Einlässe 5 geradlinig orientiert und zueinander fluchtend positioniert sind. Insgesamt kann somit ein besonders widerstandsarmer Übergangsbereich zwischen den verstellbaren Kanälen 4 und den festen Kanälen 3 erreicht werden. Desweiteren können auch die Einlässe 7 der verstellbaren Kanäle 4 jeweils mit Einlauftrichter ausgestattet sein, um z.B. in der Drehmomentstellung den Einlaufwiderstand zu reduzieren.

Bezugnehmend auf Fig. 1 ist erkennbar, dass die verstellbaren Kanäle 4 im Verteiler 2 so angeordnet sind, dass in der Leistungsstellung zwischen den Einlässen 5 der festen Kanäle 3 und den Auslässen 8 der verstellbaren Kanäle 4 jeweils ein Ringspalt 22 ausgebildet ist, wobei gleichzeitig die Einlässe 7 der verstellbaren Kanäle 4 nach wie vor offen sind. Hierdurch ist es in der Leistungsstellung grundsätzlich möglich, dass Frischluft zusätzlich auch durch die verstellbaren Kanäle 4 in die festen Kanäle 3 gelangt. Gemäß der hier gezeigten, bevorzugten Ausführungsform erfolgt die Dimensionierung der Ringspalte 22 sowie die Konturierung der Einlässe 5 der festen Kanäle 3 und der Auslässe 8 der verstellbaren Kanäle 4 gezielt so, dass sich an jedem Ringspalt 22 eine Saugstrahlpumpe 23 ausbildet. Diese Saugstrahlpumpen 23 saugen im Betrieb der Lufteinlasseinrichtung 1 zusätzlich Frischluft durch den jeweiligen verstellbaren Kanal 4 an. Dabei arbeitet diese Saugstrahlpumpe 23 synchron zur Ladungswechselfrequenz der Brennkraftmaschine und unterstützt die Aufladung der Brennräume der Brennkraftmaschine. Beispielsweise sind die Saugstrahlpumpen 23 so dimensioniert, dass etwa 1/3 der den Brennräumen der Brennkraftmaschine zugeführten Frischluft durch die verstellbaren Kanäle 4 in die festen Kanäle 3 gelangt, während dementsprechend 2/3 der Frischluft direkt aus dem Verteiler 2 durch die Ringspalte 22 in die festen Kanäle 3 gelangt. Die Ausbildung der Saugstrahlpumpen 23 ist hier außerdem dadurch begünstigt, dass einerseits die Einlässe 5 der festen Kanäle 3 mit Einlauftrichtern versehen sind und andererseits die Ringdichtungen 21 mit dazu komplementären Außenkonturen versehen sind.

Die erfindungsgemäße Lufteinlasseinrichtung 1 zeichnet sich durch besonders günstige, insbesondere widerstandsarme, Strömungseigenschaften aus, die sowohl in der Drehmomentstellung als auch in der Leistungsstellung zu einer verbesserten Frischluftzuführung zu den Brennräumen der Brennkraftmaschine führt. Gleichzeitig baut die Lufteinlasseinrichtung 1 vergleichsweise kompakt und zeichnet durch einen einfachen und somit kostengünstigen Aufbau aus.

## Patentansprüche

1. Lufteinlasseinrichtung zur Frischluftversorgung einer Brennkraftmaschine, insbesondere in einem Kraftfahrzeug,
- mit einem Verteiler (2),
- mit mehreren am Verteiler (2) fest angeordneten festen Kanälen (3), die jeweils einen mit dem Verteiler (2) kommunizierenden Einlass (5) und jeweils einen an die Brennkraftmaschine anschließbaren Auslass (6) aufweisen,
- mit mehreren im Verteiler (2) verstellbar angeordneten verstellbaren Kanälen (4), die jeweils einen im Verteiler (2) angeordneten Einlass (7) und jeweils einen im Verteiler (2) angeordneten Auslass (8) aufweisen und die zwischen einer Drehmomentstellung, in welcher die Auslässe (8) der verstellbaren Kanäle (4) jeweils an einen Einlass (5) der festen Kanäle (3) anschließen, so dass die verstellbaren Kanäle (4) die festen Kanäle (3) verlängern, und einer Leistungsstellung verstellbar sind, in welcher die Auslässe (8) der verstellbaren Kanäle (4) von den Einlässen (5) der festen Kanäle (3) beabstandet sind,
- wobei die verstellbaren Kanäle (4) im Verteiler (2) translatorisch verstellbar angeordnet sind und zum Verstellen zwischen der Drehmomentstellung und der Leistungsstellung einen translatorischen Hub (9_{L}, 9_{D}) durchführen,
- wobei zum Verstellen der verstellbaren Kanäle (4) eine Verstelleinrichtung (14) vorgesehen ist,
**dadurch gekennzeichnet,**
- **dass** die Verstelleinrichtung (14) einen Kurbeltrieb (15) aufweist,
- **dass** die Auslässe (8) der verstellbaren Kanäle (4) jeweils mit einer Ringdichtung (21) versehen sind, die in der Drehmomentstellung den jeweiligen Einlass (5) des zugehörigen festen Kanals (3) nach außen dicht verschließt.

2. Lufteinlasseinrichtung nach Anspruch 1,
**dadurch gekennzeichnet,**
**dass** die verstellbaren Kanäle (4) über mindestens eine Linearführung (11) am Verteiler (2) translatorisch verstellbar gelagert sind.

3. Lufteinlasseinrichtung nach Anspruch 2,
**dadurch gekennzeichnet,**
**dass** die Linearführung (11) zumindest einen Führungsstab (12) und eine darauf aufgesteckte Führungshülse (13) aufweist, wobei entweder der Führungsstab (12) am Verteiler (2) und die Führungshülse (13) an den verstellbaren Kanälen (4) fest angebracht ist oder umgekehrt.

4. Lufteinlasseinrichtung nach einem der Ansprüche 1 bis 3,
**dadurch gekennzeichnet,**
**dass** in der Leistungsstellung zwischen den Einlässen (5) der festen Kanäle (3) und den Auslässen (8) der verstellbaren Kanäle (4) jeweils ein Ringspalt (22) ausgebildet ist und die Einlässe (7) der verstellbaren Kanäle (4) offen sind.

5. Lufteinlasseinrichtung nach Anspruch 4,
**dadurch gekennzeichnet,**
**dass** die Dimensionierung der Ringspalte (22) und die Konturierung der Einlässe (5) der festen Kanäle (3) sowie der Auslässe (8) der verstellbaren Kanäle (4) so aufeinander abgestimmt sind, dass sich an jedem Ringspalt (22) eine Saugstrahlpumpe (23) ausbildet, die im Betrieb der Lufteinlasseinrichtung (1) Frischluft durch den jeweiligen verstellbaren Kanal (4) ansaugt.

6. Frischlufteinlasseinrichtung nach einem der Ansprüche 1 bis 5,
**dadurch gekennzeichnet,**
**dass** mehrere oder alle verstellbaren Kanäle (4) eine gemeinsam verstellbare Einheit (10) bilden.

7. Lufteinlasseinrichtung nach einem der Ansprüche 1 bis 6,
**dadurch gekennzeichnet,**
**dass** der Kurbeltrieb (15) eine am Verteiler (2) drehbar gelagerte Kurbelwelle (16) aufweist, die über wenigsten ein Pleuel (18) wenigstens eine Pleuelstange (19) antreibt, die an mindestens einem verstellbaren Kanal (4) schwenkbar gelagert ist.

8. Lufteinlasseinrichtung nach einem der Ansprüche 1 bis 7,
**dadurch gekennzeichnet,**
**dass** der Kurbeltrieb (15) so ausgestaltet und angeordnet ist, dass die verstellbaren Kanäle (4) ihre Drehmomentstellung am oder nahe am oberen Totpunkt des Kurbeltriebs (15) erreichen.

9. Lufteinlasseinrichtung nach einem der Ansprüche 1 bis 8,
**dadurch gekennzeichnet,**
**dass** die Einlässe (5) der festen Kanäle (3) und/oder die Einlässe (7) der verstellbaren Kanäle (4) jeweils einen Einlauftrichter aufweisen oder als Einlauftrichter ausgestaltet sind.

10. Lufteinlasseinrichtung nach einem der Ansprüche 1 bis 9,
**dadurch gekennzeichnet,**
**dass** die Einlässe (5) der festen Kanäle (3) und die Auslässe (8) der verstellbaren Kanäle (4) so aufeinander abgestimmt sind, dass in der Drehmomentstellung ein Übergangsbereich zwischen den verstellbaren Kanälen (4) und den festen Kanälen (3) im wesentlichen einen konstanten Querschnitt und/oder im wesentlichen einen geradlinigen Verlauf aufweist.

## Claims

1. An air intake device for supplying fresh air to an internal combustion engine, in particular in a motor vehicle,
- with a distributor (2),
- with a plurality of fixed channels (3) which are fixedly arranged on the distributor (2), each of them comprising an inlet (5) communicating with the distributor (2) and each of them comprising an outlet (6) connectable to the internal combustion engine,
- with a plurality of adjustable channels (4) which are adjustably arranged in the distributor (2), each of them comprising an inlet (7) arranged in the distributor (2) and each of them comprising an outlet (8) arranged in the distributor (2), and which are adjustable between a torque position, in which each of the outlets (8) of the adjustable channels (4) connect to an inlet (5) of the fixed channels (3) in such a manner that the adjustable channels (4) elongate the fixed channels (3), and an output position in which the outlets (8) of the adjustable channels (4) are spaced apart from the inlets (5) of the fixed channels (3),
- wherein the adjustable channels (4) in the distributor (2) are arranged in a translatory adjustable manner and, for adjusting between the torque position and the output position, carry out a translatory stroke (9_{L}, 9_{D}),
- wherein for adjusting the adjustable channels (4), an adjusting device (14) is provided,
**characterized in**
- **that** the adjusting device (14) comprises a crank mechanism (15),
- **that** each of the outlets (8) of the adjustable channels (4) is provided with a ring seal (21) which, in the torque position, tightly seals the respective inlet (5) of the associated fixed channel (3) to the outside.

2. The air intake device according to claim 1,
**characterized in**
**that** the adjustable channels (4) are mounted in a translatory adjustable manner on the distributor (2) by means of at least one linear guide (11).

3. The air intake device according to claim 2,
**characterized in**
**that** the linear guide (11) comprises at least one guide rod (12) and one guide sleeve (13) fitted thereon, wherein either the guide rod (12) is firmly attached to the distributor (2) and the guide sleeve (13) is firmly attached to the adjustable channels (4) or vice versa.

4. The air intake device according to any one of the claims 1 to 3,
**characterized in**
**that** in each output position between the inlets (5) of the fixed channels (3) and the outlets (8) of the adjustable channels (4), one annular gap (22) is formed, and the inlets (7) of the adjustable channels (4) are open.

5. The air intake device according to claim 4,
**characterized in**
**that** the dimensioning of the annular gaps (22) and the contouring of the inlets (5) of the fixed channels (3) and the outlets (8) of the adjustable channels (4) are adapted to one another in such a manner that at each annular gap (22), a suction jet pump (23) is formed which, during operation of the air intake device (1), takes in fresh air through the respective adjustable channel (4).

6. The air intake device according to any one of the claims 1 to 5,
**characterized in**
**that** a plurality of or all adjustable channels (4) form a jointly adjustable unit (10).

7. The air intake device according to any one of the claims 1 to 6,
**characterized in**
**that** the crank mechanism (15) comprises a crankshaft (16) which is rotatably mounted on the distributor (2) and which, by means of at least one con-rod (18), drives at least one connecting rod (19) which is pivotably mounted on at least one adjustable channel (4).

8. The air intake device according to any one of the claims 1 to 7,
**characterized in**
**that** the crank mechanism (15) is configured and arranged in such a manner that the adjustable channels (4) reach their torque position at or close to the upper dead center of the crank mechanism (15).

9. The air intake device according to any one of the claims 1 to 8,
**characterized in**
**that** the inlets (5) of the fixed channels (3) and/or the inlets (7) of the adjustable channels (4) each comprise one inlet funnel or are configured as inlet funnel.

10. The air intake device according to any one of the claims 1 to 9,
**characterized in**
**that** the inlets (5) of the fixed channels (3) and the outlets (8) of the adjustable channels (4) are adapted to one another in such a manner that in the torque position, a transition region between the adjustable channels (4) and the fixed channels (3) has substantially a constant cross-section and/or has substantially a straight run.

## Revendications

1. Dispositif d'admission d'air pour l'alimentation en air frais d'un moteur à combustion interne, en particulier sur un véhicule automobile, comprenant
- un répartiteur (2),
- plusieurs canaux (3) disposés de façon fixe sur le répartiteur (2), qui présentent chacun une entrée (5) communiquant avec le répartiteur (2) et une sortie (6) pouvant être raccordée au moteur à combustion interne,
- plusieurs canaux (4) réglables disposés de façon ajustable dans le répartiteur (2), qui présentent chacun une entrée (7) disposée dans le répartiteur (2) et une sortie (8) disposée dans le répartiteur (2) et qui peuvent être réglés entre une position de couple, dans laquelle les sorties (8) des canaux (4) réglables sont raccordées chacune à une entrée (5) des canaux (3) fixes, de telle sorte que les canaux (4) réglables prolongent les canaux (3) fixes, et une position de puissance, dans laquelle les sorties (8) des canaux (4) réglables sont espacées des entrées (5) des canaux (3) fixes,
- les canaux (4) réglables étant disposés dans le répartiteur (2) de façon réglable par translation et effectuent une course de translation (9_{L}, 9_{D}) pour le réglage entre la position de couple et la position de puissance,
- un dispositif de réglage (14) étant prévu pour le réglage des canaux (4) réglables,
**caractérisé en ce que**
- le dispositif de réglage (14) présente une commande par manivelle (15),
- **en ce que** les sorties (8) des canaux (4) réglables sont dotées chacune d'un joint annulaire (21), qui ferme de façon étanche vers l'extérieur, dans la position de couple, l'entrée (5) respective du canal (3) fixe spécifique.

2. Dispositif d'admission d'air selon la revendication 1,
**caractérisé en ce que**
les canaux (4) réglables sont logés de façon à pouvoir être réglés par translation au moyen d'au moins un guide linéaire (11) sur le répartiteur (2).

3. Dispositif d'admission d'air selon la revendication 2,
**caractérisé en ce que**
le guide linéaire (11) présente au moins une barre de guidage (12) et un manchon de guidage (13) emboîté dessus, la barre de guidage (12) étant placée de façon fixe sur le répartiteur (2) et le manchon de guidage (13) sur les canaux (4) réglables ou inversement.

4. Dispositif d'admission d'air selon l'une quelconque des revendications 1 à 3,
**caractérisé en ce que**
à chaque fois une fente annulaire (22) est conçue dans la position de puissance entre les entrées (5) des canaux (3) fixes et les sorties (8) des canaux (4) réglables et les entrées (7) des canaux (4) réglables sont ouvertes.

5. Dispositif d'admission d'air selon la revendication 4,
**caractérisé en ce que**
le dimensionnement des fentes annulaires (22) et le contourage des entrées (5) des canaux (3) fixes et des sorties (8) des canaux (4) réglables sont adaptés les uns aux autres de telle sorte que sur chaque fente annulaire (22) se forme une pompe à jet aspirant (23), qui, lorsque le dispositif d'admission d'air (1) fonctionne, aspire de l'air frais par le canal (4) réglable respectif.

6. Dispositif d'admission d'air selon l'une quelconque des revendications 1 à 5,
**caractérisé en ce que**
plusieurs ou tous les canaux (4) réglables forment une unité (10) réglable conjointement.

7. Dispositif d'admission d'air selon l'une quelconque des revendications 1 à 6,
**caractérisé en ce que**
la commande par manivelle (15) présente un vilebrequin (16) logé de façon rotative sur le répartiteur (2), qui entraîne au moyen d'au moins une bielle (18) au moins une tige de bielle (19) qui est logée de façon à pouvoir basculer sur au moins un canal (4) réglable.

8. Dispositif d'admission d'air selon l'une quelconque des revendications 1 à 7,
**caractérisé en ce que**
la commande par manivelle (15) est conçue et disposée de telle sorte que les canaux (4) réglables atteignent leur position de couple sur ou à proximité du point mort haut de la commande par manivelle (15).

9. Dispositif d'admission d'air selon l'une quelconque des revendications 1 à 8,
**caractérisé en ce que**
les entrées (5) des canaux (3) fixes et/ou les entrées (7) des canaux (4) réglables présentent chacun un entonnoir d'entrée ou sont conçus comme entonnoir d'entrée.

10. Dispositif d'admission d'air selon l'une quelconque des revendications 1 à 9,
**caractérisé en ce que**
les entrées (5) des canaux (3) fixes et les sorties (8) des canaux (4) réglables sont adaptées les unes aux autres de telle sorte que, dans la position de couple, une zone de transition entre les canaux (4) réglables et les canaux (3) fixes présente sensiblement une section constante et/ou sensiblement un tracé rectiligne.
